# FASCICULE DE BREVET EUROPEEN

(11) **EP 1 249 361 B1**
(45) Date de publication et mention de la délivrance du brevet: **02.06.2004**
(21) Numéro de dépôt: 02290846.1
(22) Date de dépôt: 05.04.2002
(51) Int. Cl.: B60K 17/08, B60K 17/16, F16H 37/08, F16H 37/04

(54) **Transmission pour véhicule automobile avec rapport supplémentaire court à commande manuelle situé près du différentiel**
Getriebe für Kraftfahrzeug mit zusätzlicher, am Differential angeordneter und von Hand geschalteter Untersetzung
Transmission for motor vehicle with manually controlled supplementary underdrive arranged near the differential

(30) Priorité: 11.04.2001 FR 0104987
(43) Date de publication de la demande: 16.10.2002
(73) Titulaire: Renault s.a.s., 92100 Boulogne Billancourt (FR)
(72) Inventeur: Mercay, Patrice, 78170 La Celle Saint Cloud (FR); Raoul, Michel, 78990 Elancourt (FR)

(56) Documents cités:
- EP-A- 0 943 479
- DE-A- 19 930 605
- US-A- 3 095 759
- US-A- 5 503 603
- US-A- 5 728 022

## Description

La présente invention se rapporte à une transmission pour véhicule automobile, comprenant un ensemble compact boîte de vitesses manuelle-différentiel.

Avec les ensembles connus de ce type, le nombre de rapports de la transmission correspond au nombre de rapports de la boîte de vitesses, par exemple cinq rapports avant et un rapport arrière.

Une telle transmission "classique" donne satisfaction pour des véhicules destinés à circuler dans des conditions normales, sur route.

Certains véhicules tels que par exemple des véhicules utilitaires ou des véhicules communément appelés "Sport Utility Vehicles" peuvent être utilisés dans des conditions difficiles, notamment des conditions de franchissement (pentes, terrains difficiles) ou de charges (démarrage en pente) qui nécessitent une vitesse de progression très lente, par exemple aux alentours de 5 km/h. Une telle vitesse très lente ne peut être obtenue, avec un véhicule équipé d'une transmission classique telle que définie ci-dessus, que moyennant des manoeuvres délicates de l'embrayage.

Une transmission selon le préambule de la revendication 1 est connue de US 5503603 A. Cette transmission comprend un ensemble boîte de vitesses manuelle-différentiel avec un train de démultiplication supplémentaire à train épicycloïdal à enclenchement sélectif intercalé entre la couronne de différentiel et le boîtier de différentiel. La couronne de différentiel forme aussi le porte-satellites du train épicycloïdal.

Il serait donc souhaitable de pouvoir disposer, sur une transmission comprenant un tel ensemble compact boîte de vitesses manuelle-différentiel, tout en conservant l'architecture et l'encombrement de la transmission "classique", et en reprenant le plus possible d'éléments de cette dernière, notamment de la boîte de vitesses, d'une solution simple, peu encombrante et peu onéreuse pour obtenir un rapport supplémentaire court, très démultiplié, enclenchable à volonté, procurant au conducteur du véhicule un agrément supplémentaire dans la mesure où il lui évite des manoeuvres délicates de l'embrayage dans les conditions particulières d'utilisation définies précédemment. Un tel rapport supplémentaire court devrait par exemple permettre une vitesse de progression de l'ordre de 5 km/h pour un régime moteur d'environ 1000 tr/min.

Une telle démultiplication pourrait être réalisée directement par deux étages de démultiplication comprenant celui du rapport de première de la boîte de vitesses et celui du différentiel. Cette solution impose de grands entraxes entre l'arbre primaire et l'arbre secondaire de la boîte de vitesses, ainsi qu'entre l'arbre secondaire et le boîtier de différentiel. Cette solution n'est pas satisfaisante car très encombrante radialement.

Une telle démultiplication pourrait également être obtenue en amont, par le biais d'un arbre intermédiaire placé en entrée de boîte de vitesses. Cette solution impose un arbre supplémentaire ainsi que deux paliers. De plus, comme la démultiplication serait placée en amont des autres rapports, ceux-ci seraient davantage sollicités mécaniquement et devraient donc être renforcés. C'est pourquoi cette solution serait onéreuse.

Selon la présente invention, la transmission comprenant une ensemble boîte de vitesses manuelle-différentiel comprend un train de démultiplication supplémentaire à enclenchement sélectif au niveau du boîtier de différentiel.

Cette solution permet de disposer d'une démultiplication supplémentaire située le plus en aval possible, ce qui permet de conserver un maximum d'éléments communs avec une transmission "classique" ne possédant pas de rapport supplémentaire court.

De préférence, le train de démultiplication supplémentaire est intercalé entre la couronne de différentiel et le boîtier de différentiel.

Le train de démultiplication supplémentaire peut avantageusement comprendre un train épicycloïdal.

Dans ce cas, la couronne de différentiel peut comprendre une denture externe engrenant avec le pignon d'attaque de le boîte de vitesses et une denture interne engrenant avec les satellites du train épicycloïdal.

De préférence, le boîtier de différentiel peut constituer le porte-satellites du train épicycloïdal.

Le train épicycloïdal peut comprendre un système de crabotage et de préférence un système de crabotage avec synchroniseur.

Cette dernière solution permet au conducteur du véhicule de passer le rapport supplémentaire court en marche, sans avoir à arrêter le véhicule.

Le système de crabotage peut comprendre un baladeur qui dans une première position lie le planétaire du train épicycloïdal au carter de mécanisme de la boîte (déblocage du train épicycloïdal) et dans une seconde position lie le planétaire au porte-satellites du train épicycloïdal et à la couronne de différentiel (blocage du train épicycloïdal).

La commande du train épicycloïdal peut s'effectuer avantageusement par le levier de vitesses de la boîte de vitesses, de préférence par action sur une gâchette qui commande un actionneur déplaçant le baladeur et par manoeuvre du levier de vitesses, la course de sélection du levier assurant le positionnement du baladeur et la course de passage du levier assurant l'enclenchement par synchronisation et crabotage.

En se référant aux dessins schématiques annexés, on va décrire ci-après plus en détail une transmission "classique" et une transmission selon l'invention, dérivée de cette transmission "classique", ainsi que les phases de fonctionnement de la transmission selon l'invention. Sur les dessins:
- la figure 1 est une vue schématique simplifiée d'une transmission comprenant une boîte de vitesses manuelle et un différentiel attaqué directement par le pignon d'attaque de la boîte;
- la figure 2 est une vue correspondante d'une transmission suivant l'invention avec rapport supplémentaire court;
- la figure 3 montre la disposition de la grille de sélection de vitesses dela transmission selon la figure 2
- les figures 4 à 6 sont des vues partielles à plus grande échelle de la transmission de la figure 2 dans différentes phases de fonctionnement concernant le rapport supplémentaire court.

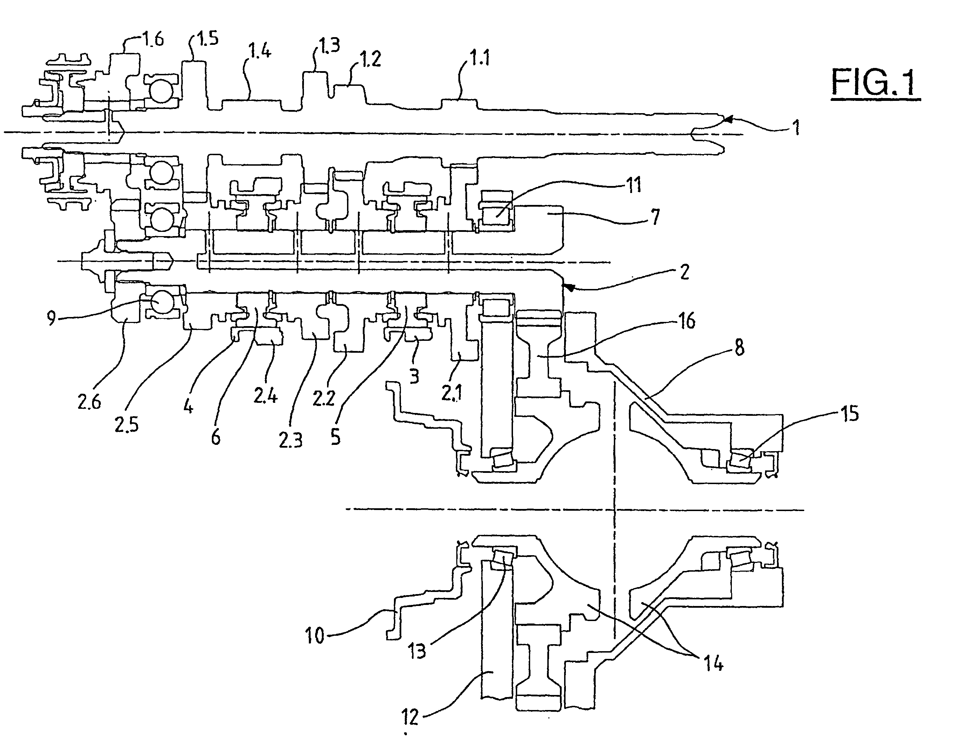

Selon la figure 1, une transmission de véhicule automobile comprend une boîte de vitesses manuelle attaquant directement un différentiel.

La boîte de vitesses à cinq rapports AV et un rapport AR comprend un arbre primaire 1 et un arbre secondaire 2. L'arbre primaire 1 dont l'extrémité de droite est reliée à un embrayage non représenté porte cinq pignons fixes (pignons 1.1 de 1ère, 1.2 de 2ème, 1.3 de 3ème, 1.4 de marche AR, 1.5 de 4ème) et un pignon fou 1.6 de Sème. L'arbre secondaire 2 porte quatre pignons fous (pignons 2.1 de 1ère, 2.2 de 2ème, 2.3 de 3ème, 2.5 de 4ème), un baladeur 3 de 1ère/2ème, un pignon 2.4 de marche arrière sur baladeur 4 de 3ème/4ème, un pignon fixe 2.6 de 5ème, deux groupes synchroniseurs 5, 6 et un pignon fixe d'attaque 7 du côté de l'embrayage dont seule une partie de carter 8 est visible. L'arbre secondaire 2 est monté sur roulement à billes 9 du côté du carter 10 de mécanisme de boîte et sur roulement à rouleaux 11 du côté embrayage, dans une plaque 12 rapportée sur le carter d'embrayage 8, le pignon d'attaque 7 étant situé au-delà de la portée du roulement 11. La plaque 12 comporte également un logement pour un roulement à rouleaux coniques 13 servant au montage d'un côté du boîtier de différentiel 14 qui est monté du côté opposé par un roulement à rouleaux coniques 15 dans le carter d'embrayage 8.

Il est à noter que le boîtier de différentiel 14 et la couronne de différentiel 16 solidaire du boîtier 14 et engrenant avec le pignon d'attaque 7 de la boîte sont les seuls éléments du différentiel à être représentés, les satellites et les planétaires du différentiel n'étant symbolisés que par leurs axes.

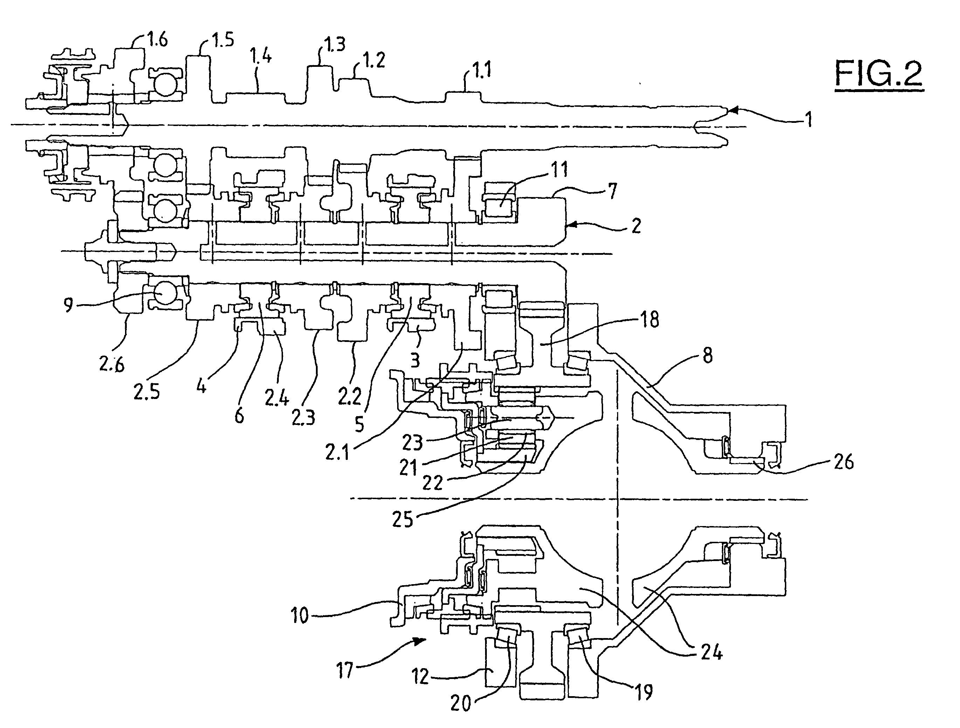

La transmission selon l'invention telle qu'illustrée par la figure 2, qui reprend l'architecture générale de la transmission selon la figure 1 et comporte la même boîte de vitesses, comprend un train de démultiplication 17 supplémentaire en forme de train épicycloïdal intercalé entre la boîte de vitesses et le différentiel, et plus précisément entre la couronne de différentiel et le boîtier de différentiel.

La couronne de différentiel 18 est ici montée par deux roulements à rouleaux coniques 19 et 20 d'une part dans le carter d'embrayage 8 et d'autre part dans un logement de diamètre accru de la plaque 12 rapportée sur le carter d'embrayage 8.

La couronne 18 présente une denture externe engrenant avec le pignon d'attaque 7 de la boîte, et une denture interne en prise avec trois satellites 21 du train de démultiplication 17. Les satellites 21 montés par des roulements à aiguilles 22 sur des axes 23 fixés au boîtier de différentiel 24 qui sert de porte-satellites engrènent avec la denture externe d'un pignon planétaire 25 fixé sur le boîtier de différentiel 24

Le boîtier de différentiel 24 est monté d'un côté par un palier lisse 26 dans le carter d'embrayage 8 et est positionné du côté opposé par les trois satellites 21 et la couronne de différentiel 18.

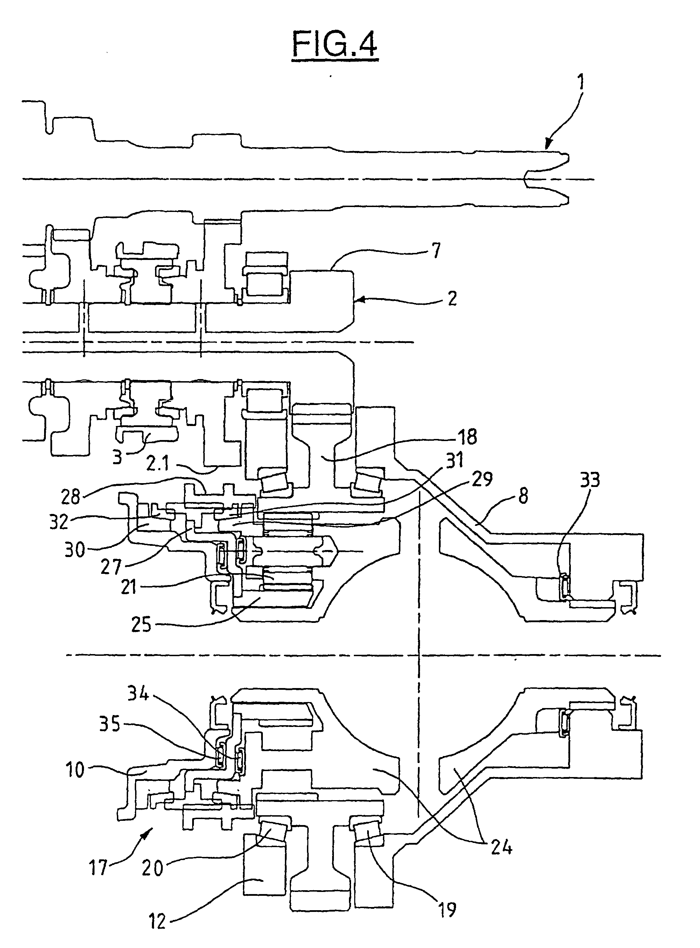

Tel que cela apparaît mieux sur les figures 4 à 7, le pignon planétaire 25 porte, du côté du carter 10 de mécanisme de boîte, un moyeu 27 sur lequel coulisse un baladeur 28.

Le boîtier de différentiel 24 et le carter 10 de mécanisme de boîte comportent en face du moyeu 27 du baladeur 28 deux cônes de synchroniseur à crabots 29, 30 sur lesquels sont centrés deux anneaux de synchroniseur 31, 32 indexés angulairement par le moyeu 27 solidaire du pignon planétaire 25.

Trois roulements 33, 34 et 35 du type butées à aiguilles entre le boîtier de différentiel 24 et le carter d'embrayage 8, entre le boîtier de différentiel 24 et le moyeu 27 ainsi qu'entre le moyeu 27 et le carter 10 de mécanisme de boîte reprennent les efforts axiaux engendrés par le train épicycloïdal sur les deux carters.

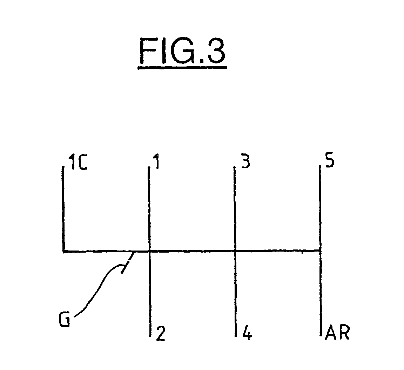

Selon la figure 3 qui montre la grille de sélection de vitesses de la transmission de la figure 2, le rapport supplémentaire court désigné 1C peut être sélectionné et enclenché à l'aide du même levier de vitesses que les rapports de la boîte de vitesses. Le rapport 1C est disposé à gauche de la grille, à côté du rapport de 1ère, et devient accessible par exemple en tirant une gâchette G située sur le levier de vitesses, sous le pommeau. La gâchette commande un actionneur non représenté chargé de déplacer le baladeur 28.

La course de sélection (mouvement vers la gauche du levier de vitesses) permet à cet actionneur de positionner le baladeur 28 vers la gauche, du côté du carter 10 de mécanisme de boîte.

La course de passage (mouvement vers l'avant du levier de vitesses) permet la réalisation de la synchronisation et du crabotage du rapport 1C.

En se référant aux figures 4 à 6, on va décrire ci-après plusieurs phases de fonctionnement de la transmission de la figure 2 en ce qui concerne la sélection et le passage du rapport supplémentaire court 1C.

A la phase A selon la figure 4, la boîte de vitesses est en position point mort. Le baladeur 3 de la boîte est en position neutre et le baladeur 28 du train épicycloïdal 17, en position de crabotage du cône 29 du boîtier de différentiel 24, lie le planétaire 25 au porte-satellites constitué par le boîtier de différentiel 24, c'est-à-dire bloque le train épicycloïdal 17.

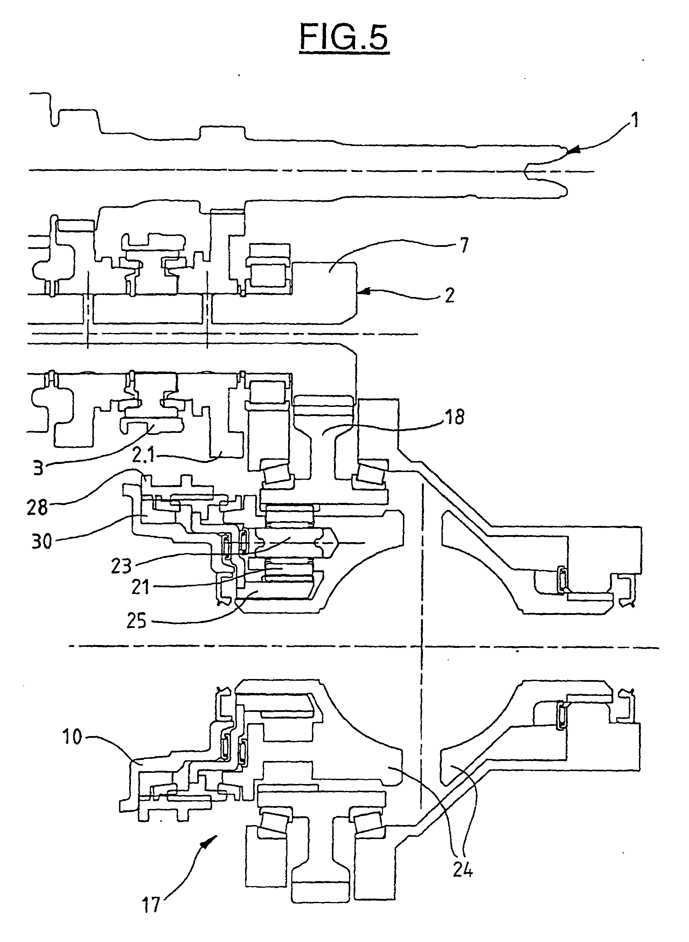

A la phase B selon la figure 5, le levier de vitesses est en position de sélection du rapport court 1C. Le baladeur 3 de la boîte est toujours en position neutre, mais le baladeur 28 du train épicycloïdal 17 a libéré le cône 29 et craboté le cône 30 du carter 10 de mécanisme de boîte, ce qui lie le planétaire 25 au carter 10. Le train 17 est ainsi débloqué.

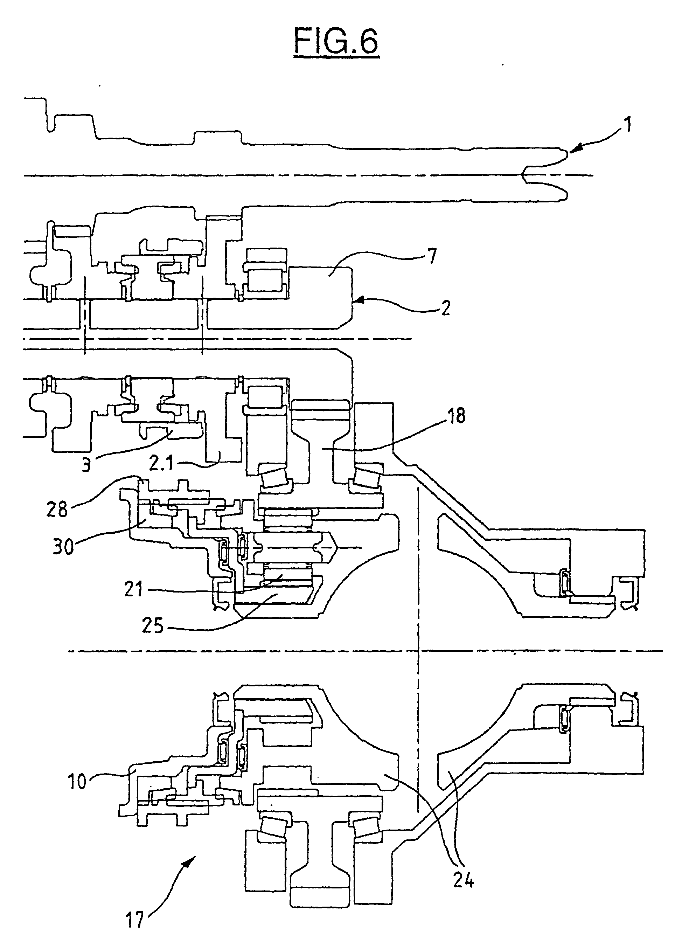

A la phase C selon la figure 6, le levier de vitesses est en position de passage du rapport court 1C. Le baladeur 28 du train épicycloïdal 17 étant toujours en position de crabotage du cône 30 du carter 10, le baladeur 3 de la boîte de vitesses a craboté le pignon secondaire 2.1 de 1ère pour lier ce pignon fou à l'arbre secondaire 2. Le rapport 1C est ainsi enclenché et le couple du rapport delère de la boîte est transmis de la couronne 18 en prise avec le pignon d'attaque 7 de la boîte, au boîtier de différentiel 24 avec une démultiplication supplémentaire correspondant au rapport du train 17 débloqué.

Les phases de fonctionnement non représentées concernant le décrabotage et la désélection du rapport 1C comprennent le retour du baladeur 3 de la boîte à la position neutre, ce qui désolidarise le pignon secondaire 2.1 de 1ère de l'arbre secondaire 2, et le retour du baladeur 28 du train 17 de sa position de crabotage du cône 30 du carter 10 à sa position de crabotage du cône 29 du boîtier de différentiel 24, ce qui bloque de nouveau de train épicycloïdal 17 pour la sélection et le passage de tous les autres rapports au niveau de la boîte de vitesses.

## Revendications

1. Transmission pour véhicule automobile, comprenant un ensemble boîte de vitesses manuelle-différentiel avec un train de démultiplication supplémentaire à train épicycloïdal à enclenchement sélectif intercalé entre la couronne de différentiel et le boîtier de différentiel, la couronne de différentiel (18) comprenant une denture externe engrenant avec le pignon d'attaque (7) de la boîte de vitesses, **caractérisée par le fait que** la couronne comprend aussi une denture interne engrenant avec les satellites (21) du train épicycloïdal.

2. Transmission suivant la revendication 1, **caractérisée par le fait que** le boîtier de différentiel (24) constitue le porte-satellites du train épicycloïdal.

3. Transmission suivant la revendication 1 ou 2, **caractérisée par le fait que** le train épicycloïdal comprend un système de crabotage (28, 29, 30).

4. Transmission suivant la revendication 1 ou 2, **caractérisée par le fait que** le train épicycloïdal comprend un système de crabotage (28, 29, 30) avec synchroniseur (31, 32).

5. Transmission suivant la revendication 3 ou 4, **caractérisée par le fait que** le système de crabotage comprend un baladeur (28) qui dans une première position lie le planétaire (25) du train épicycloïdal au carter (10) de mécanisme de la boîte, avec déblocage du train épicycloïdal, et dans une seconde position lie le planétaire (25) au porte-satellites constitué par le boîtier de différentiel (24) et à la couronne de différentiel (18), avec blocage du train épicycloïdal.

6. Transmission suivant la revendication 5, **caractérisée par le fait que** la commande de blocage et de déblocage du train épicycloïdal s'effectue sur le levier de vitesses de la boîte par action sur une gâchette (G) qui commande un actionneur déplaçant le baladeur (28) et par action sur le levier de vitesses, la course de sélection du levier de vitesses assurant le positionnement du baladeur (28) et la course de passage assurant l'enclenchement par synchronisation et crabotage.

7. Transmission suivant la revendication 6, **caractérisée par le fait que** le déblocage du train épicycloïdal est lié à l'enclenchement du rapport de 1ère au niveau de la boîte de vitesses.

## Patentansprüche

1. Getriebe für ein Kraftfahrzeug, welches eine Gesamtheit eines manuellen Differentialgetriebes aufweist mit einem zusätzlichen Untersetzungsgetriebegang mit Umlaufgetriebezug mit selektiver Einrastung, welcher zwischen dem Differential-Tellerrad und dem Differentialgehäuse zwischengeschaltet ist, wobei das Differential-Tellerrad (18) eine äußere Verzahnung aufweist, welche mit dem Antriebsritzel (7) des Getriebes ineinander greift,
**dadurch gekennzeichnet, dass** das Tellerrad auch eine innere Verzahnung aufweist, welche mit den Planetenrädern (21) des Umlaufgetriebezugs ineinander greift.

2. Getriebe gemäß Anspruch 1, **dadurch gekennzeichnet, dass** das Differentialgetriebe (24) den Planetenradträger des Umlaufgetriebezugs bildet.

3. Getriebe gemäß Anspruch 1 oder 2, **dadurch gekennzeichnet, dass** der Umlaufgetriebezug ein Klauenkupplungssystem (28, 29, 30) aufweist.

4. Getriebe gemäß Anspruch 1 oder 2, **dadurch gekennzeichnet, dass** der Umlaufgetriebezug ein Klauenkupplungssystem (28, 29, 30) mit Synchronisierer (31, 32) aufweist.

5. Getriebe gemäß Anspruch 3 oder 4, **dadurch gekennzeichnet, dass** das Klauenkupplungssystem eine Schiebewelle (28) aufweist, welche in einer ersten Stellung das Zentralrad (25) des Umlaufgetriebezugs mit dem Gehäuse (10) des Mechanismus des Getriebes mit Freigabe des Umlaufgetriebezugs verbindet, und in einer zweiten Stellung das Zentralrad (25) mit dem Planetenradträger, welcher durch das Differentialgehäuse (24) gebildet wird, und dem Differential-Tellerrad (18) mit Blockierung des Umlaufgetriebezugs verbindet.

6. Getriebe gemäß Anspruch 5, **dadurch gekennzeichnet, dass** die Steuerung der Blockierung und der Freigabe des Umlaufgetriebezugs am Schalthebel des Getriebes durch Betätigung auf einen Zuhalter (G) ausgeführt wird, welcher ein Betätigungselement steuert, wobei es die Schiebewelle (28) verstellt und durch Betätigung des Schalthebels, wobei der Auswahllauf des Schalthebels die Positionierung der Schiebewelle (28) sicherstellt und der Verlauf des Übergangs das Einrasten durch Synchronisierung und Klauenkupplung sicherstellt.

7. Getriebe gemäß Anspruch 6, **dadurch gekennzeichnet, dass** die Freigabe des Umlaufgetriebezugs mit der Einrastung des ersten Ganges hinsichtlich des Getriebes verbunden ist.

## Claims

1. An automobile vehicle transmission, comprising a manual gearbox-differential assembly with an additional gear reduction train with an epicycloidal gear train that can be selectively triggered interposed between the differential ring gear and the differential housing, the differential ring gear (18) comprising outer teeth engaging with the drive pinion (7) of the gearbox, **characterised in that** the ring gear also comprises inner teeth engaging with the satellites (21) of the epicycloidal train.

2. A transmission as claimed in claim 1, **characterised in that** the differential housing (24) forms the satellite carrier of the epicycloidal gear train.

3. A transmission as claimed in claim 1 or 2, **characterised in that** the epicycloidal gear train comprises a claw coupling system (28, 29, 30).

4. A transmission as claimed in claim 1 or 2, **characterised in that** the epicycloidal gear train comprises a claw coupling system (28, 29, 30) with a synchroniser (31, 32).

5. A transmission as claimed in claim 3 or 4, **characterised in that** the claw coupling system comprises a sliding shaft (28) which, in a first position, connects the planetary gear (25) of the epicycloidal gear train to the box mechanism casing (10), thereby unlocking the epicycloidal gear train, and, in a second position, connects the planetary gear (25) to the satellite carrier formed by the differential housing (24) and to the differential ring gear (18), thereby locking the epicycloidal gear train.

6. A transmission as claimed in claim 5, **characterised in that** control of the locking and unlocking of the epicycloidal gear train is carried out by the gear lever of the gearbox, by action on a trigger (G) which controls an actuator displacing the sliding shaft (28) and by action on the gear lever, the selection stroke of the gear lever ensuring the positioning of the sliding shaft (28) and the engagement stroke ensuring engagement by synchronisation and claw coupling.

7. A transmission as claimed in claim 6, **characterised in that** the unlocking of the epicycloidal gear train is linked to the engagement of the first ratio at the level of the gearbox.
